# EUROPEAN PATENT APPLICATION

(11) **EP 1 561 381 A1**
(43) Date of publication of application: **10.08.2005**
(21) Application number: 05002213.6
(22) Date of filing: 03.02.2005
(51) Int. Cl.: A22B 7/00, A22B 5/00

(54) **System for traceability of meats**

(30) Priority: 06.02.2004 IT MO20040026
(71) Applicant: VE.MA.C. S.R.L., 41051 Castelnuovo Rangone (Modena) (IT); FB Engineering S.R.L., 41012 Carpi (MO) (IT)
(72) Inventor: Constantini, Maurizio, 41057 Spilamberto (MO) (IT); Malagoli, Uliano, 41041 Casinalbo (MO) (IT); Vezzali, Franco, 41057 Spilamberto(MO) (IT); Bulgarelli, Fabio, 41012 Carpi (MO) (IT)
(74) Representative: Luppi, Luigi

(57) **Abstract**

An apparatus comprises identifying means (3) for identifying a food product (13) during processing from an animal in a manufacturing process, wherein said identifying means (3) is individually associated with a inedible functional element (2) associated with said product (13) through said processing.

## Description

The invention relates to an apparatus for the traceability of meats on a production line, in particular in butchering or meat-processing plants or in sausage factories or other places.

In the field of meat traceability, identifying labels are known that are applied to the part of the animal obtained by butchering, for example the shoulder, the loin or the leg or other, in a separating line. On the label information on the breeder and the butcher or one or more codes identifying this information, in general in the form of a barcode is normally recorded.

A drawback of known traceability methods is that an operator has to read the label in a defined phase of the manufacturing or treating process and record the data in an appropriate archive, for example a computer, with the risk of possible reading or recording errors that no longer enable the individual part to be identified.

If a barcode identifies the single piece, the code can be read by an optical reading device. Nevertheless, the reading may not be correct, if the label is not turned towards the reading device or has creased parts.

Furthermore, the label significantly limits the processability of the meat, for example, if the meat has to be salted, the part of the peace of meat with the label is not reached by the salt. Again, salt or preserving substances may soil the label and make it illegible even for a reading device.

A further drawback of traceability by labels is that they can easily become detached from the piece, thus no longer identifying the piece.

A further drawback is that it is not possible, unless manually, to add information to the label, such as for example the weight of the piece obtained after trimming processing, the label needs instead to be replaced by a new reprinted label provided with the new information.

Applying one or more identifying codes of the processed part by means of ink printing or by laser printing to an inedible part of the meat to be traced, for example to a portion of rind, is also known.

Nevertheless, this solution is not applicable to a piece of meat that is devoid of a portion to be discarded when it is consumed.

Similarly to the aforementioned label system, the code printed directly on the piece may become discoloured or altered due to processing undergone by the piece, and no longer be readable either by a reading device or directly by an operator.

An object of the present invention is to improve the known systems for tracing meats.

Another object is to provide an apparatus that enables a piece to be unambiguously identified in a meat production line.

A still further object is to provide an apparatus for traceability of meats that enables information on a given piece to be added or removed without having to replace identifying labels.

A still further object is to provide an apparatus for traceability of meats that enables easy management and monitoring of the movements of the pieces in the warehouse and during transit.

According to the invention, there is provided an apparatus comprising identifying means for identifying a food product during processing from an animal in a manufacturing process, characterised in that said identifying means is individually associated with an inedible functional element associated with said product through said processing.

Owing to the combination of the identifying means and the functional element associated with the product piece, it is possible to identify the position and the state of the product at every phase of the manufacturing process in which the functional element is present.

In particular, the identifying means may comprise a programmable integrated circuit that may be powered by a remote device by means of an antenna, also called a "chip" or "chip-tag" or "tag".

The functional element may comprise holding means for each product suitable for enabling the piece, during use, to be grasped and/or released to be handled.

The functional element may also comprise marker means suitable for visually indicating that a processing step on said product piece has been completed, such as for example a quality seal.

The invention may be better understood and carried out with reference to the attached drawings that illustrate some exemplifying and not limiting embodiments thereof, in which:
Figure 1 is a perspective view of an apparatus comprising identifying means for identifying a piece being processed from an animal in a manufacturing process of food products;
Figure 2 is a view according direction A of Figure 1;
Figure 3 is a perspective schematic view of the apparatus in Figure 1 during a phase of the manufacturing process of meats;
Figure 4 is a front view of a version of the apparatus in Figure 1;
Figure 5 is an enlarged and partially sectioned detail of Figure 4;
Figure 6 is a view according direction B of Figure 4.

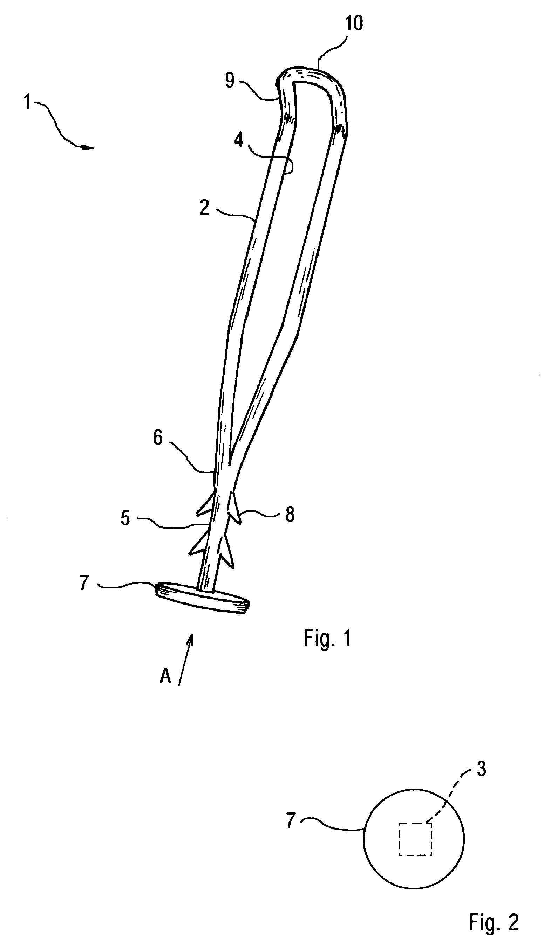

With reference to Figure 1, there is shown an apparatus 1 for the traceability of meats suitable for being associated with a food product on a production line, in particular in butchering or meat-processing plants or in sausage factories or other places. The food product may for example be a piece of meat obtained by butchering or other processing, in particular ham, loin, throat, bacon, shoulder, neck, shin, speck, cotechino, zampone, trotters, rind, tongue, bones, ribs, sausages, liver, kidneys, spleen, heart, head, ears, cold sausage such as salami or mortadella in particular.

The apparatus 1 may comprise a functional element, in particular a holding element 2 suitable for enabling a piece of meat or a sausage product to be grasped and/or released to be handled during use.

The holding element 2 comprises an eyelet 4 that extends for almost the all main dimension of the holding element 2 defining an elongated ring, a stem 5 arranged at a first end 6 of the elongated ring and which is connected to a central zone of a disk 7 arranged substantially transversely to the stem 5. From the stem 5 thorns 8 protrude, in particular two pairs of thorns 8 arranged in diametrically opposed regions of the stem 5, having a securing function, as will be specified below.

The holding element 2 furthermore comprises, at a second end 9 opposite the first end 6, a loop zone 10 tilted with respect of the main extension direction of the holding element 2.

As shown in Figure 2, the apparatus 1 comprises identifying means of the product associated with the inedible functional element associated with said product through said processing.

In particular, the holding element 2 is provided with an identification device 3 comprising a programmable integrated circuit, also known as a "chip" or "chip-tag" or "tag", which may be supplied by a remote appliance by means of an antenna.

The identification device 3 may be included in a central region of the disk 7.

The identification device 3 may be of the type programmable only once and operate solely as a reading device after it has been programmed. During programming, the user may store the identifying code of the product to enable unique identification of the product and of its source of production by means of a programmer that may also operate without electric contacts, for example by means of low-frequency electromagnetic waves - radio waves.

The memory of the integrated circuit may on the other hand be of the reprogrammable type and therefore also comprise in addition to a non-rewritable part which stores the unique product identification code, also a rewritable part in which other information can be stored.

In the case of an integrated circuit with a non-rewritable memory, a predisposed electronic management programme associates with the identification code of the single product all the desired information and which refers to definite processing steps performed on the product. Inputting data about the product being processed into the management programme can be done by an operator or by means of the remote appliances located in strategic positions of the product flow line.

Also in the case of the integrated circuit with a rewritable memory, a preset management programme coordinates the information on the single products, which can be stored directly on each "chip". Also in this case there can be provided suitable reading and writing appliances of the data in preset positions of the production line.

In the version in Figure 1, the holding element 2 performs the function of a hanging element.

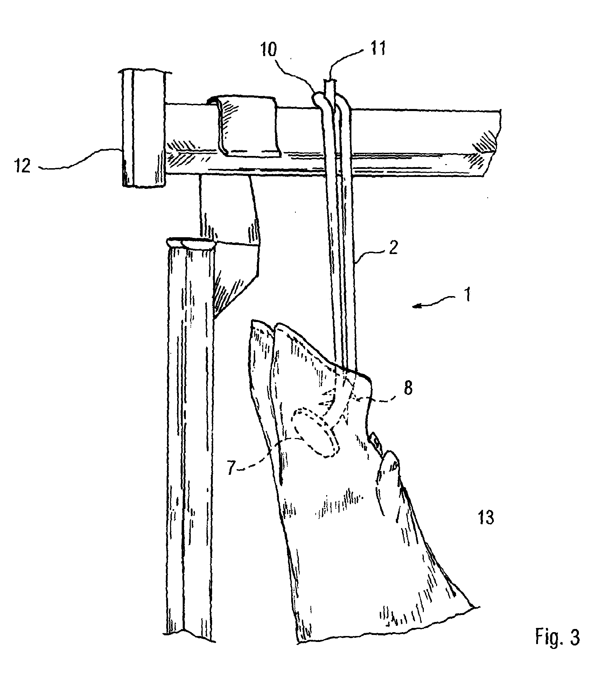

In fact, as shown in Figure 3, the eyelet 4 is suitable for receiving a suspension pin 11 arranged on a suitable support structure 12 for a product 13 that can be suspended to be conveyed with other similar products to define a batch, or to undergo particular processing, such as maturing, in which the products must remain in given environmental conditions for a certain time.

The loop 10 rests on a portion of the support structure 12, enabling the product 13 to remain suspended in a substantially vertical position.

The apparatus 1 is associated with the product 13 by inserting first the loop 10, in manual or automated mode, through a through cavity present or obtained in the product 13, then passing the entire holding element 2 through the cavity until the disk 7 interacts with walls of the through cavity. The diameter of the disk 7 is greater than the dimension of the through cavity in such a way that the disk 7 interacts with the walls of the cavity as an abutment in such a way as to "hook up" the product 13.

The thorns 8, by interacting with the product 13, limit sliding between the apparatus 1 and the product 13, and the possibility that the disk 7 may leave the prodoct.

In the case of the production of hams, the through cavity may be obtained between two tendons of a leg of pork and the apparatus 1 may be used as an alternative to a known hanging cord generally inserted by an operator manually or semiautomatically in order to hang the ham.

The apparatus 1, being able to be for example made of plastic or of metal, in addition to enable tracing of a product, in particular to be hung, has the great advantage, compared with the aforementioned hanging cord, of being extremely hygienic, having greater durability as it is not subject to decay, and of being capable of being reused, in particular if the integrated circuit of the identification device is reprogrammable.

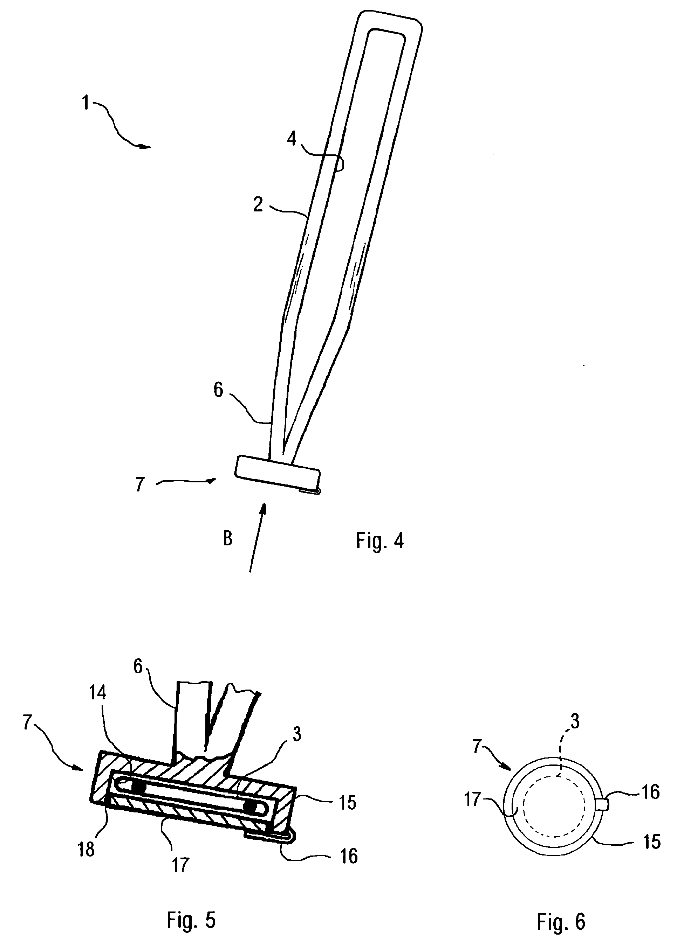

In a version of the apparatus 1, the eyelet 4 can also be devoid of the loop 10, as shown in Figure 4.

With reference to Figures 5 and 6, there is illustrated a version of the apparatus 1 in which the identification device 3, having for example a shape such as a circular shape, is housed in a cavity 14, in particular also of circular shape obtained inside a body 15 of the disk 7. The disk 7 furthermore comprises a lid 17, connected to the body 15 through a connecting strip 16. The lid 17 is fixed to the body 15 along an edge zone 18 of the cavity 14 in such a way that the identification device 3 is internally retained on the cavity 14. In particular, the lid 16 can be sealed using highfrequency electromagnetic waves, for example ultrasound, or by means of other known techniques.

In a version that is not shown the apparatus 1 can be configured as a hook and the identification device 3 can be inserted in a suitable housing arranged on the hook. The position of the identification device 3 on the hook version can be the desired one.

In a further version that is not shown, the functional element may comprise quality indicators, in particular a quality seal, suitable for visually indicating the completion of a product processing or checking step. In this version, the identification device 3 is included in the quality seal.

## Claims

1. Apparatus comprising identifying means (3) for identifying a food product (13) during processing from an animal in a manufacturing process, **characterised in that** said identifying means (3) is individually associated with an inedible functional element (2) associated with said product (13) through said processing.

2. Apparatus according to claim 1, wherein said identifying means (3) comprises electronic means, preferably with an integrated circuit.

3. Apparatus according to claim 2, wherein said integrated circuit is reprogrammable.

4. Apparatus according to any one of claims 1 to 3, wherein said functional element comprises holding means (2) suitable for enabling said product (13), during said manufacturing process, to be grasped and/or released to be handled.

5. Apparatus according to any one of claims 1 to 4, wherein said functional element comprises hanging means (2) suitable for enabling said product to be hung.

6. Apparatus according to claim 5, wherein said hanging means (2) comprises eyelet means (4) suitable for receiving suspension pin means (11).

7. Apparatus according to claim 5, or 6, wherein said hanging means (2) comprises abutting means (7) suitable for interacting in use with a portion of said product (13) to hook said product (13).

8. Apparatus according to claim 7, wherein said abutting means comprises a disk (7) arranged substantially transversely to a hanging direction of said product (13).

9. Apparatus according to claim 8 as appended to claim 2 or 3, or to any one of claims 4 to 7 as appended to claim 2 or 3, wherein said integrated circuit is included in said disk (7).

10. Apparatus according to any one of claims 5 to 8, wherein said hanging means comprises securing means (8) suitable for limiting during use sliding between said hanging means (2) and said product (13).

11. Apparatus according to claim 10 as appended to any one of claims 6 to 9 as appended to claim 6, wherein said securing means comprises protruding means (8) that protrudes from a region (6) of said hanging means (2) interposed between said eyelet means (4) and said abutting means (7).

12. Apparatus according to any one of claims 5 to 11, wherein said hanging means (2) comprises a loop (10) tilted with respect to a hanging direction of said product.

13. Apparatus according to claim 5, wherein said hanging means (2) comprises hook means.

14. Apparatus according to any preceding claim, wherein said functional element (2) comprises quality indicating means, preferably a quality seal.

15. Apparatus according to any preceding claim, wherein said product is chosen from a group comprising: ham, loin, throat, bacon, shoulder, neck, shin, speck, cotechino, zampone, trotters, rind, tongue, bones, cold sausages, ribs, sausage, liver, kidneys, spleen, heart, head, ears, mortadella.
